# EUROPEAN PATENT APPLICATION

(11) **EP 3 767 569 A1**
(43) Date of publication of application: **20.01.2021**
(21) Application number: 19187159.9
(22) Date of filing: 18.07.2019
(51) Int. Cl.: G06Q 20/20, G06Q 20/32, G06Q 20/38, G06Q 20/40

(54) **AN ELECTRONIC TRANSACTION METHOD AND DEVICE USING A FLEXIBLE TRANSACTION IDENTIFIER**

(71) Applicant: Mastercard International Incorporated, Purchase NY 10577 (US)
(72) Inventor: COLLINGE, Mehdi, 7141 Hainaut (BE); JOHNSON, Alan, Maldon, Essex CM9 8HW (GB)
(74) Representative: Murgitroyd & Company

(57) **Abstract**

Currently, many aspects of electronic transactions have become digital, and may therefore be performed online using mobile devices. However, many of these possibilities have been adopted by no longer supporting legacy systems - in the newer and emerging economies, this does not create a major problem as they have few consumers using legacy systems and methods. But this lack of interoperability limits the adoption of legacy-compatible systems and method. It also restricts their adoption in other countries. In addition, the increased use of payment through such electronic transactions is increasing the frequency and amount of fraudulent transactions.

A computer-implemented electronic transaction method 400 is provided comprising: providing 270 a transaction identifier 150 to initiate an electronic transaction, the transaction identifier 150 comprising: a routing identifier 160; a serial number (174) not directly associated with the user 210; contextual information 190 comprising one or more parameters associated with the generation of the transaction identifier 150; verification information 180 comprising a value calculated deterministically using the serial number 174 and the contextual information 190. The transaction identifier 150 is conveyed to an Authenticator 600 using the routing identifier 160; who authenticates the transaction identifier 150 using the verification information 180, the serial number (174) and the contextual information 190, and allows initiation if it is considered authentic.

The authenticator has a high degree of freedom in defining the validity of the data contents. The improved transaction identifier may be adequately authenticated using data and values comprised in the improved transaction identifier itself. Optionally, additional external data or values (not comprised in the improved transaction identifier) may also be used. By using a serial number not directly associated with the user, more possibilities and more flexibility are provided to initiate electronic transactions, and in particular, electronic payment transactions.

## Description

### FIELD

The present disclosure generally relates to an electronic transaction method using a flexible transaction identifier. It further relates to a device for initiating an electronic transaction according to one of those methods.

### BACKGROUND

Traditional electronic transaction systems and methods, in particular electronic financial transaction methods and systems, rely on a high degree of standardization to ensure a high degree of interoperability. In addition, the adoption of technical improvements is more likely if existing and legacy operation is supported. However, this greatly limits the speed of introduction of new developments. On the other hand, the high degree of standardization reduces the likelihood that fraudulent transactions may be approved, or if approved, increases the likelihood that the fraud will be detected and dealt with appropriately.

Legacy payment methods have their origin in consumers having a bank agreement with a banking establishment and performing electronic payment transactions with a physical card associated with an account held with that banking establishment. By providing the card number, the Primary Account Number (PAN), to a merchant, an electronic transaction was initiated, resulting in funds being transferred from the associated bank account to the bank account of the merchant. The number was often transferred using a magnetic stripe reader.

Currently, many aspects of electronic payment transactions have become digital and may therefore be performed online using mobile devices. For example, applications such as WeChat Pay and Alipay, provide convenience to consumers who wish to pay for goods or services, or who wish to pay (or be paid by) fellow account holders. However, many of these possibilities have been adopted by no longer supporting legacy systems - in the newer and emerging economies, this does not create a major problem as they have few consumers using legacy systems and methods. But this lack of interoperability limits the adoption of legacy-compatible systems and methods. It also restricts their adoption in other countries. In addition, the increased use of payment through such electronic transactions is increasing the frequency and amount of fraudulent transactions.

It is an object of the invention to provide additional electronic transaction possibilities, suitable for financial or payment transactions, which retain a high degree of interoperability with legacy systems and provide a high degree of fraud protection.

### GENERAL STATEMENTS

According to a first aspect of the present disclosure, there is provided a computer-implemented electronic transaction method comprising: a user obtaining a serial number not directly associated with the user; the user providing a transaction identifier to an electronic transaction acceptance environment to initiate an electronic transaction, the transaction identifier comprising: a routing identifier; the serial number not directly associated with the user; contextual information comprising one or more parameters associated with the generation of the transaction identifier; verification information comprising a value calculated deterministically using the serial number and the contextual information; the method further comprising: the electronic transaction acceptance environment communicating the transaction identifier to an Authenticator using the routing identifier; the Authenticator authenticating the transaction identifier using the verification information, the serial number and the contextual information; and allowing initiation of the electronic transaction if the transaction identifier is considered authentic.

The authenticator has a high degree of freedom in defining the validity of the data contents. The improved transaction identifier may be adequately authenticated using data and values comprised in the improved transaction identifier itself. Optionally, additional external data or values (not comprised in the improved transaction identifier) may also be used.

By using a serial number not directly associated with the user, more possibilities and more flexibility are provided to initiate electronic transactions, and in particular, electronic payment transactions. For example, a user may provide one or more transaction identifiers to another user, such as a parent may do with a child or a company with an employee. This is different to a PAN or credit card number - these may be considered conventional transaction identifiers, but they are directly associated with the User 220 due to the use of a card and/or account number.

According to a second aspect of the present disclosure, a computer-implemented electronic transaction method is provided wherein the user obtains the serial number comprised in the transaction identifier.

Although the method may be performed by distributing serial numbers, distributing transaction identifiers may be more secure. In addition, it may simplify the hardware and/or software that that the user needs to initiate electronic transactions.

According to further aspect of the present disclosure, a computer-implemented electronic transaction method is provided wherein the method further comprises: the user providing an earlier-available serial number and/or an earlier-available transaction identifier to a transaction identifier generator; and the user obtaining the serial number and/or the transaction identifier from the transaction identifier generator.

It may be convenient to provide serial numbers and/or identifiers that are linked to earlier-available number. For example, providing a consecutive serial number to a particular user. Additionally or alternatively, the use of a transaction identifier may simplify authentication of the user.

According to yet another aspect of the present disclosure, a computer-implemented electronic transaction method is provided wherein the method further comprises: the user obtaining a further serial number and/or a further transaction identifier, which the user subsequently uses to initiate a further electronic transaction.

By allowing a user to store one or more additional transaction identifiers, for example on a mobile device associated with them (their mobile device), the user may initiate electronic financial transactions when offline using one or more of the stored improved transaction identifiers.

According to yet another aspect of the present disclosure, a computer-implemented electronic transaction method is provided wherein the method further comprises: the user obtaining a transaction identifier generator; and using the transaction identifier generator to generate one or more serial numbers and/or one or more transaction identifiers for subsequently initiating one or more electronic transactions.

A higher degree of security and a higher degree of independence for a user may be provided by providing a transaction identifier generator. This may be implemented in any suitable hardware and/or software comprised in (or co-operating with) a computing device, such as a mobile device.

The user may be required to obtain verification information from a trusted source. Optionally, the transaction identifier generator may be configured and arranged to generate verification information, further increasing the degree of operational independence.

According to a still further aspect of the present disclosure, a computer-implemented electronic transaction method is provided wherein the method further comprises indirectly associating the serial number with the user.

Although the transaction identifiers are substantially self-contained allowing a high degree of flexibility, it may be advantageous to associate one or more transaction identifiers indirectly with a user. For example, a list of user who have received particular serial numbers and/or particular transaction identifiers may be retained by an issuer and/or authenticator. Additionally or alternatively, particular serial numbers and/or particular transaction identifiers may be pre-approved for use by an issuer and/or authenticator. This indirect association may be made by, for example: issuing the serial number and/or the transaction identifier to the user; making the serial number and/or the transaction identifier available for use in one or more electronic financial transaction by the user; accepting the transaction identifier for authentication by an authenticator following use by the user in a financial transaction; authenticating the transaction identifier for authentication by an authenticator following use by the user in a financial transaction; and any combination thereof.

According to another aspect of the present disclosure, a computer-implemented electronic transaction method is provided wherein: the electronic transaction acceptance environment is configured and arranged to process the transaction identifier as a standard-compliant transaction identifier; the transaction identifier is standard-compliant; the routing identifier is standard-compliant; and the standard is ISO-7812, EMV, or any combination thereof.

By communicating the transaction identifier as a standard compliant identification identifier, existing software and hardware may be used to communicate the transaction identifier to the authenticator.

In particular, the routing identifier is standard-compliant as this comprises the routing instructions such that the instruction may reach the authenticator. This is the minimum part that should be standard-compliant. Optionally, the serial number and/or verification information are not compliant with the standard - these parts of the identifier do not need to be used in routing to the base address. However, an authenticator may optionally use one or more parts of the transaction identifier, other than the routing identifier, to internally route the transaction identifier to the correct processing environment.

According to another aspect of the present disclosure, a computer-implemented electronic transaction method is provided, wherein the transaction identifier resembles a Primary Account Number (PAN).

Use of an improved transaction identifier that resembles a PAN may provide one of the highest degrees of interoperability as the hardware and/or software to process such numbers are widespread.

Additionally or alternatively, the transaction identifier may comprise a Luhn check digit.

This may also provide a high degree of interoperability as the hardware and/or software to process such check digits are also widespread.

According to further aspect of the present disclosure, a computer-implemented electronic transaction method is provided further comprising: making the serial number and/or the transaction identifier unavailable for subsequent use after initiating the electronic transaction using the transaction identifier, or after allowing initiation of the electronic transaction by the Authenticator.

The improved transaction identifier provides a very flexible method for electronic transactions. The identifiers may be configured for a single use in any convenient may - for example, only for a single usage to initiate the electronic transaction. However, as a refusal to allow the transaction to be initiated may be related to communication issues, it may be more advantageous to restrict usage to only a single authorization. This may optionally be used in combination with a default where re-use is allowed unless restricted. Such restrictions may optionally be made dependent on one or more parties involved and/or circumstances relating to the transaction. Usage and re-usage policies may optionally change at different times.

According to a still further aspect of the present disclosure, a computer-implemented electronic transaction method is provided further comprising: making the serial number and/or the transaction identifier available for subsequent use after initiating the electronic transaction using the transaction identifier, or after allowing initiation of the electronic transaction by the Authenticator.

Additionally or alternatively, the flexibility may be used in different ways. For example, the identifiers may be configured for a single use by allowing re-use after the electronic transaction was initiated. This may optionally be used in combination with a default where re-use is restricted unless allowed. Such restrictions may optionally be made dependent on one or more parties involved and/or circumstances relating to the transaction. Usage and re-usage policies may optionally change at different times.

According to yet another aspect of the present disclosure, a computer-implemented electronic transaction method is provided to the electronic transaction acceptance environment as a non-alphanumeric representation.

The flexibility permitted by the transaction identifier allows standardized representations, such as QR codes, 1D bar codes and 2D bar codes to be used to convey the transaction identifier to the acceptance environment.

According to a still further aspect of the current disclosure, the transaction identifier comprises no more than nineteen digits, preferably no more than eighteen digits, more preferably no more seventeen digits, most preferably no more than sixteen digits.

In particular, when providing a representation as a QR code or 1D bar code, the number of digits may be limited by standardization, and/or the legibility and readability of the code which decreases as the number of digits increase. Keeping the number of digits to nineteen or less is preferred. Shorter identifiers may also be advantageous as existing hardware and/or software may be able to recognize and handle such lengths without extensive updates and/or modifications.

Additionally or alternatively, the serial number may be arranged to comprise no more than nine digits, preferably no more than eight digits, most preferably no more than seven digits.

According to yet another aspect of the current disclosure, the method further comprises: after receiving the transaction identifier by the Authenticator, evaluating one or more parameters associated with the generation and/or use of the transaction identifier in the electronic transaction; and allowing initiation of the electronic transaction if the one or more parameters are evaluated to be acceptable.

Although the transaction identifier may be used and authenticated using only the data comprised with it, it may be advantageous to further consider one or more parameters associated with the generation and/or use of the transaction identifier. This may reduce the risk of authenticating a fraudulent transaction.

These one or more parameters may be conveyed external to the transaction identifier. Additionally or alternatively, the transaction identifier may comprises a mode identifier for conveying one or more parameters to the Authenticator about: use of a server to generate one or more values in the respective transaction identifier; use of a user device to generate one or more values in respective transaction identifier; use of user authentication before generation of one or more values in the respective transaction identifier; use of an amount for generating the verification information; use of a storage register for the respective transaction identifier; and any combination thereof.

According to yet another aspect of the current disclosure, the transaction identifier may comprise contextual information for conveying data to the Authenticator regarding: the generation of the respective transaction identifier, the generation of any verification information comprised in the respective transaction identifier, the algorithm used to generate the respective transaction identifier, hardware used to generate the respective transaction identifier, software used to generate the respective transaction identifier, or any combination thereof.

The transaction identifier is flexible enough to convey further data - this may be used for record-keeping and/or authentication purposes. Additionally or alternatively, the transaction identifier may also comprise: a network identifier associated with the Authenticator; a generator identifier associated with a generator of the transaction identifier; a processing indicator for influencing how the Authenticator processes the transaction identifier; a mapping server identifier for indicating to the Authenticator a server to be used for the authentication; and any combination thereof.

According to a further aspect of this disclosure, a device is provided, associated with a user, configured and arranged to initiate any of the electronic transaction methods described, the device comprising: a storage register for storing one or more transaction identifiers and for making them available for subsequent use in one or more electronic transactions.

By using a storage register, offline usage of the transaction identifiers is made more convenient.

A device associated with a user, configured and arranged to initiate an electronic transaction according to any of the preceding claims, the device comprising: an identifier generator for generating one or more serial numbers and/or one or more transaction identifiers, and for making them available for subsequent use in financial transactions.

By using an identifier generator, offline usage of the transaction identifiers is made even more convenient

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, which illustrate preferred and exemplary embodiments, and which are not necessarily drawn to scale, wherein:
FIG. 1 depicts an electronic transaction method using an improved transaction identifier;
FIG. 2 depicts a generation method for improved transaction identifiers;
FIG. 3 schematically depicts possible parts and types of information which may be comprised in an improved transaction identifier;
FIG. 4 depicts another example of an electronic transaction method using one or more improved transaction identifiers;
FIG. 5 depicts a further example of an electronic transaction method using one or more improved transaction identifiers; and
FIG. 6 depicts yet another example of an electronic transaction method using one or more improved transaction identifiers

### DETAILED DESCRIPTION

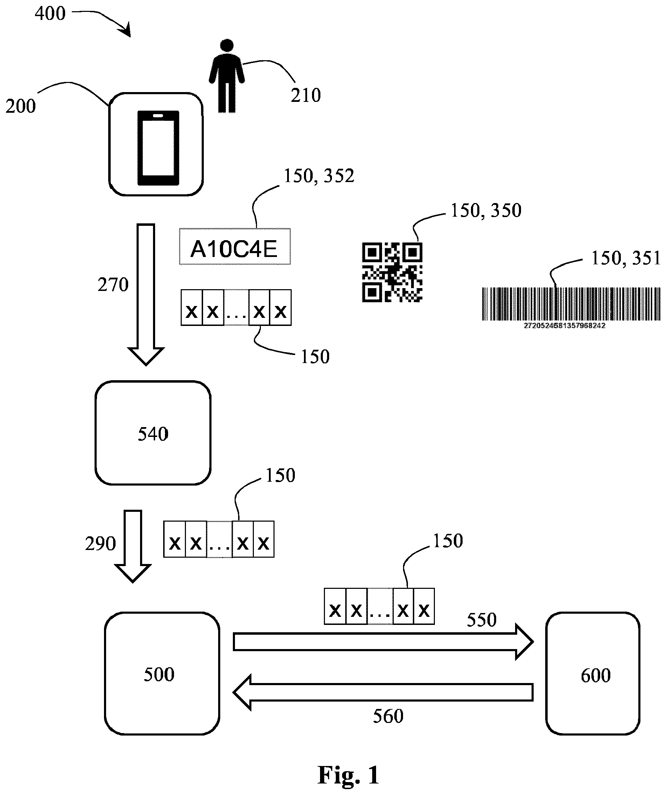

FIG. 1 depicts an electronic transaction method 400, using an improved transaction identifier 150. It is suitable for performing financial transactions, which is used as a non-limiting example. In the context of this disclosure, payment is used as a non-limiting example. The skilled person will realize that the methods may be performed for any type of transaction, not only providing funds to a merchant in exchange for a good or service (payment), but any form of financial transaction between parties. This includes:
- transferring funds between any two parties, including consumers;
- refund or discount transactions, where funds are transferred from a merchant to a consumer; and
- transferring funds between two accounts for the same parties, such as topping up the balance of an electronic wallet, or topping up the balance of credits to be used in a subsequent financial transaction.

The method 400 comprises:
a) a User 210, such as a Consumer, providing 270 an improved transaction identifier 150 to a POI 540.

In this context, a POI 540 (point of interaction) is a hardware and/or software component that enables a User 210, such as a Consumer, to initiate an electronic transaction. In particular, it allows a financial or electronic payment transaction to be initiated. It may, for example, be manually operated, partially automated or fully automated. It comprises a processor, programmed to receive the improved transaction identifier 150 and to forward it 290.

For example, it may be comprised in point of sale equipment (e.g. a card reader). Newer generations of POI 540 allow devices other than credit cards to be used to make payments (e.g. a payment application on a mobile device), provided that the same high level of security is ensured by the equipment.

The User 210 may provide 270 the improved transaction identifier 150 to the POI 540 either directly or through an intermediary, to initiate the electronic transaction.

As depicted, the improved transaction identifier 150 is provided 270 using a mobile device 200, the device 200 being associated with the User 210. This is not essential to the method 400, but one of the preferred embodiments - any suitable means of interaction and information transfer may be used. Any suitable computing device 200 may be configured and arranged to perform the methods, such as a computer, laptop, tablet or mobile telephone.

For example, any suitable technology or transfer channel 270 may be used to provide the improved transaction identifier 150, such as using NFC to send a digital code. Other options include user interaction, manual entry, electrical contact, close coupling, electromagnetic radiation, induction, visible or non-visible light, Contactless MagStripe, RF, Bluetooth, WiFi, mobile data, LAN, USB, HTTP, HTTPS, XMPP, web sockets, FTP, eCommerce, or any combination thereof.

If a mobile device 200 is used, an image may be displayed on the screen for reading by another device comprising a POI 540, such as another mobile device comprising a camera.

In the case of a mobile device 200 providing the improved transaction identifier 150, the mobile device 200 may first receive information from the POI 540 about any strict requirements and/or preferences for the electronic transaction. For example, if using transit gate using Bluetooth, the acceptance environment may push information (such as the transit station or gate information) to any devices in Bluetooth range of the gate.

The improved transaction identifier 150 may be provided 270 directly, or as a suitable representation 350, 351, 352. In this context, the distinction between an improved transaction identifier 150 and a representation 350, 351, 352 is not important - they may be considered to be functionally the same. If the improved transaction identifier 150 is a relatively simple code, the code itself may be used for the transfer 270. However, the reliability, and in some cases the security, of the transfer 270 is improved by providing 270 the improved transaction identifier 150 as one or more representations, such as a numerical representation, a non-numerical representation, and/or an alphanumerical representation 352.

The current trend of consumer's carrying a smart device, comprising processing power, an image capture device, such as an optical camera, and image processing software, is being utilized to scan the representation 350, 351, 352 of a code displayed or reflected on another device, sticker, decal etc. Optical-character recognition (OCR) may be used for representations 352 comprising characters. Preferred are representations designed to be more easily optically-recognizable, as a 1D barcode 351, or an encrypted or unencrypted QR 350 code. These are non-alphanumeric representations Other options may be used such as an EMV-compliant QR code, an EMV QRCPS-compliant QR code, 2D barcode, a 2D dot code, a Micro QR code, an IQR code, a HCC2D code, an SQRC code, a FrameQR code, an Anato dot pattern, an Aztec code, a CrontoSign, a ColorCode, a Color Construct Code, a CyberCode, a d-touch, a DataGlyph, a Data Matrix, a Datastrip code, a Digimarc Barcode, a DotCode, a Dot Code, a DWCode, an EZcode, a High Capacity Color Barcode, a Han Xin Barcode, a HueCode, an InterCode, a MaxiCode, an MMCC, an MPQR code, a NexCode, a PDF417, a Qode, an AR Code, a ShotCode, a Snapcode, a SPARQCode, a VOICEYE, or any combination thereof.

Both the POI 540 and the means for providing 270 the improved transaction identifier 150 and/or its representation 350, 351, 352, may comprise one or more applications running on a mobile device. In some cases, it may be the same mobile device, and it may even be the mobile device 200 associated with the User 210.

For many of these image-based representations, the accuracy of reading may be increased by keeping the complexity, such as the number of digits, in the improved transaction identifier 150 as low as possible. Nineteen digits or less are preferred. Sixteen, seventeen, eighteen or nineteen digits are more preferred as this combines a high degree of data density with a manageable degree of representation complexity.

If only one improved transaction identifier 150 is available, then that is the one provided. If more than one is available, the selection of the improved transaction identifier 150 to be provided may be made automatically, semi-automatically, manually or some combination thereof.

For example, the device 2 00 may select the most appropriate (the most suitable) improved transaction identifier 150 or may choose one randomly (pseudo-randomly). Additionally or alternatively, the User 210 may indicate a preference. Factors which may be relevant for the selection include, for example: the time since the improved transaction identifier 150 was generated, any expiry date associated with the improved transaction identifier 150, the complexity of the improved transaction identifier 150, the compatibility of the improved transaction identifier 150 with the POI 540, and the data comprised in the improved transaction identifier 150.

Optionally, the User 210 may provide one or more improved transaction identifiers 150 to an intermediary. Subsequently, the intermediary may provide the one or more transaction identifiers 150 to the POI. The intermediary may be hardware, software or some combination thereof. It may comprise one or more applications running on a mobile device. In some cases, it may be the same mobile device as a POI application, and it may even be the mobile device 200 associated with the User 210.

An intermediary may be advantageous if the improved transaction identifier 150 required a degree of modification or conversion before being suitable for acceptance by the POI 540 - for example, to convert (split) an improved transaction identifier 150 of eighteen digits to a PAN (15 + 1 Luhn digit) and CVC2 (3-digit). This is explained in more detail below.

The method 400 further comprises:
b) the POI 540 receiving the transaction identifier 150, and providing 290 the transaction identifier 150 to an electronic transaction acceptance environment 500. The POI 540 comprises a processor or may use a portion of available power of a processor.

If the transaction identifier 150 is provided as a representation 350, 351, 352, the POI 540 may further convert the information received into the format required by the electronic transaction acceptance environment 500. The skilled person will also realize that, additionally or alternatively, the representation 350, 351, 352 may be passed to a suitably-configured electronic transaction acceptance environment 500.

The POI 540 may be in communication with the electronic transaction acceptance environment 500, it may be comprised in the electronic transaction acceptance environment 500, or some combination thereof.

Any suitable form of technology or communications channel 290 may be used (for example, see the list above for providing 270 the improved transaction identifier 150 to the POI 540, and combinations of forms may be used.

The electronic transaction acceptance environment 500 may be hardware, software or some combination thereof. It may comprise one or more applications running on a mobile device. In some cases, it may be the same mobile device as a POI application, and it may even be the mobile device 200 associated with the User 210.

The electronic transaction acceptance environment 500 is configured and arranged to process the improved transaction identifier 150 as an ISO-7812-compliant transaction identifier. More specifically, the transaction identifier 150 is ISO-7812-compliant as a whole, allowing it to be recognized as such by the electronic transaction acceptance environment 500, and to be communicated further (routed) for authentication. For this reason, the routing identifier 160 is also ISO-7812-compliant.

In the terms of this disclosure, ISO-7812-compliance for the improved transaction identifier 150 means that the transaction identifier 150 is acceptable for interpretation according to the ISO-7812 standard, and that one or more of its constituent parts (or values) may be located and accessed for further interpretation. In this case, that the routing identifier 160 value may be located and accessed for further interpretation.

For example, the improved transaction identifier 150 may appear to be an ISO-7812-compliant Primary Account Number (PAN) and may be treated as such for acceptance and routing. The validity of the constituent parts (or values), such as a Customer Account Number, is determined by the authenticator 600.

In the terms of this disclosure, ISO-7812-compliance for the routing identifier 160 means that the routing identifier 160 is acceptable for interpretation according to the ISO-7812 standard, and that the value it contains may be interpreted and used, according to the ISO-7812 standard, to route the transaction identifier 150 for authentication.

For example, the improved transaction identifier 150 may appear to be an ISO-7812-compliant Primary Account Number (PAN) and may be treated as such for acceptance and routing. The validity of the routing identifier 160, which may be comprised in an Issuer Identification Number (IIN), is determined by the electronic transaction acceptance environment 500.

At least one part (or value) comprised in the improved transaction identifier 150 is not ISO-7812-compliant. Preferably, the User 210 account identifier 174 and/or the verification information 180 are not ISO-7812-compliant. The remaining parts of the improved transaction identifier 150 may be compliant or non-compliant with ISO-7812.

In the terms of this disclosure, not-ISO-7812-compliance for the one or more constituent parts (or values) means that either:
- the values cannot be located or accessed for further interpretation according to the ISO-7812 standard; or
- the values can be located or accessed for further interpretation according to the ISO-7812 standard, but that the value it contains cannot be interpreted and/or cannot be used, according to the ISO-7812 standard.

For example, the improved transaction identifier 150 may resemble (or be) an ISO-7812-compliant Primary Account Number (PAN). In such a case, the electronic transaction acceptance environment 500 simply routes the improved transaction identifier 150 according to the appearance of the routing identifier 160, which is also ISO-7812 compliant. The routing does not require that the electronic transaction acceptance environment 500 analyze or decode the other parts of the improved transaction identifier 150.

Any other suitable numbers/identifiers and number/identifier formats that allow routing in this way through an acceptance environment 500 may be used.

It is not essential that the acceptance environment 500 be completely ISO-7812-compliant - as a minimum, it should be able to recognize and route an ISO-7812-compliant routing identifier 160. In the terms of this disclosure, such an acceptance environment 500 is considered ISO-7812-compliant.

For payment, an ISO-7812-compliant system requires a PAN (DE02) as part of the transaction data. This PAN field may consist of (or comprise) the improved transaction identifier 150.

The skilled person will also realize that the same principles - providing non-compliant data within a compliant data container - may be used with type of standardized transaction acceptance environment.

The method 400 further comprises:
c) the electronic transaction acceptance environment 500 communicating 550 the improved transaction identifier 150 to an Authenticator 600 using the routing identifier 160.

If the transaction identifier 150 is provided as a representation 350, 351, 352 by the POI 540, the electronic transaction acceptance environment 500 may further convert the information received into the format required by the Authenticator 600. The skilled person will also realize that, additionally or alternatively, any representation 350, 351, 352 received from the POI 540 may be passed to a suitably-configured Authenticator 600.

The electronic transaction acceptance environment 500 may be in communication with the Authenticator 600, the Authenticator 600 may be comprised in the electronic transaction acceptance environment 500, or some combination thereof.

Any suitable form of technology or communications channel 550 may be used (for example, see the list above for providing 270 the improved transaction identifier 150 to the POI 540, and combinations of forms may be used.

The Authenticator 600 may be hardware, software or some combination thereof. It may comprise one or more applications running on a mobile device. In some cases, it may be the same mobile device as a financial transaction acceptance application, and it may even be the mobile device 200 associated with the User 210.

The most preferred is to use an internet protocol to connect to an Authenticator 600 comprised in an online server. The electronic transaction acceptance environment 500 is configured and arranged to provide 550 (to route) the improved transaction identifier 150 as an ISO-7812-compliant transaction identifier to the Authenticator 600.

The method 400 further comprises:
d) the Authenticator 600 authenticating 560 the improved transaction identifier 150 using the verification information 180; and
e) allowing initiation 560 of the electronic transaction 400 if the transaction identifier 150 is considered authentic.

The Authenticator 600 determines whether the electronic transaction 400 should be initiated. By indicating that the improved transaction identifier 150 is authentic, the electronic transaction 400 is initiated, and the electronic transaction 400 may be subsequently approved. By indicating that the improved transaction identifier 150 not to be authentic, the electronic transaction 400 is not initiated, and the electronic transaction 400 may not be approved. Using this mechanism, the Authenticator 600 is provided with a high degree of control regarding the acceptance of the improved transaction identifiers 150.

In many cases, the User 210 may have a financial relationship with the Authenticator 600. For example, the User 210 may initiate a financial relationship with a credit card Issuer. The Issuer may then generate one or more improved transaction identifiers 150 associated with that User, or allow the User 210 to generate them themselves (this is explained in more detail below). In other cases, for example, the User 210 may have a financial relationship with an intermediary, who in turn has a financial relationship with the Authenticator 600.

The Authenticator 600 determines the rules and conditions of authentication, and determines how these rules and conditions are applied to the authentication of a particular improved transaction identifier 150.

For example, the Authenticator 600 may consider:
- the User 210 with which the particular improved transaction identifier 150 is associated;
- the circumstances of the generation of the particular improved transaction identifier 150;
- previous usage by the User 210;
- the number of improved transaction identifiers 150 that were issued to the User 210 and/or used within a period of time and/or not used within a period of time;
- the number of improved transaction identifiers 150 that are currently in circulation;
- whether the particular improved transaction identifier 150 has already been provided 550 for authentication.

As the number of digits comprised in the improved transaction identifier 150 may be limited by the standards being complied with for the operation, the number of distinct improved transaction identifiers 150 is limited. Optionally, the particular (or specific) improved transaction identifier 150 may be made unavailable for subsequent use after allowing initiation of an electronic transaction or after initiating an electronic transaction (400) - this may allow "recycling" (or re-use) of improved transaction identifiers 150.

One of the insights on which the invention is based is that the possibilities within existing financial transaction systems may be extended by complying with the minimum requirements for routing. Typically, the routing is based on the first few digits of the transaction identifier 150. For example, the first six (or eight) digits of an ISO-7812-compliant Primary Account Number (PAN) represents the IIN (Issuer Identification Number). The acceptance environment 500 within which it is being used only needs these first few digits (or the first portion of the IIN) to route the transaction identifier 150 to the required server locations determined by the Issuer (which may be an authentication of the Issuer, or a separate authenticator controlled, operated or licensed, by the Issuer. Any party may therefore determine the format and usage of the second portion of the IIN and/or the rest of the PAN.

As the contents of the transaction identifier 150 may be configured to be highly dynamic, issues of fraud may be reduced because there are few (or even none) static numbers in circulation. The static/dynamic balance is fully configurable. Additionally or alternatively, "card not present" issues are also avoided because all transactions are initiated without the card, allowing the Authenticator 600 to set appropriate authentication rules.

The User 210 is provided with one or more improved transaction identifiers 150, either directly or indirectly from the Authenticator 600.

The requirements regarding the usage and acceptance of these improved transaction identifiers 150 may include, for example, the policies of the Authenticator 600, applicable national or international law, one or more geographic locations where the improved transaction identifiers 150 may be used, one or more types of POI 540, whether to be used on-line or offline, the way in which the improved transaction identifiers 150 were generated, associated transaction amounts, information provided by the user 210 to the Authenticator 600, earlier usage of the same improved transaction identifier 150, and explicit agreements on usage. Essentially, it is a matter between the User 210 and the Authenticator 600 whether the improved transaction identifiers 150 are authenticated or not - it is therefore advantageous to make each improved transaction identifier 150 resemble a number which will be accepted for routing from the point of use by the User 210 to the Authenticator 600.

This also means that support of legacy system may not need to be abandoned, or can be gradually phased out without affecting interoperability to an inconvenient level.

ISO-7812 in the terms of this disclosure refers to ISO/IEC 7812 *Identification cards* - *Identification of issuers* available at www.iso.org. The current version comprises two parts:
- ISO/IEC 7812-1:2017 Identification cards -- Identification of issuersPart 1: Numbering system; and
   ISO/IEC 7812-2:2017 Identification cards -- Identification of issuersPart 2: Application and registration procedures.

It is not the intention to limit the scope of the invention to the current version of the standard. The skilled person will realize that future changes, amendments and versions of this standard, including replacement by an equivalent standard, will fall under the scope of protection of the claims. For the current standard, ISO/IEC 7812-1:2017 appears to be the most relevant for implementing the invention.

Although ISO-7812 is specified here as a standard, the same principles may be used for any other standard or protocol adopted for financial transactions, that allow routing in this way through an acceptance environment 500 may be used.

For example, instead of ISO7812-compliant, the routing may be made EMV-compliant. In that case,
- the one or more transaction identifiers 150 are EMV-compliant;
- the routing identifier 160 is EMV-compliant;
- the User 210 account identifier 174 and/or the verification information 180 are not EMV-compliant; and
- the electronic transaction acceptance environment 500 processes the transaction identifier 150 as an EMV-compliant transaction identifier.

In the terms of this disclosure, EMV refers to any standard of protocol managed by EMVCo, available from www.emvco.com.

It is not the intention to limit the scope of the invention to the current version of these standards. The skilled person will realize that future changes, amendments and versions of this standard, including replacement by an equivalent standard, will fall under the scope of protection of the claims.

It is not essential that the acceptance environment 500 be completely EMV-compliant - as a minimum, it should be able to recognize and route an EMV-compliant routing identifier 160. In the terms of this disclosure, such an acceptance environment 500 is considered EMV-compliant.

For payment, an EMV-compliant system requires a PAN (DE02) as part of the transaction data. This PAN field may consist of (or comprise) the improved transaction identifier 150.

The skilled person will also realize that the same principles - providing non-compliant data within a compliant data container - may be used with type of standardized transaction acceptance environment.

Any other suitable numbers that may be routed through an EMV system using an EMV-compliant routing identifier 160 may be used.

A very high degree of interoperability may be available if compliance with both EMV and ISO-7812 is assured. In addition, as the ISO-7812 and/or EMV specifications are adapted to include new functionalities and possibilities, these may be provided much earlier using the invention - it is no longer necessary to wait years or even decades before a high percentage of hardware and/or software in the world-wide financial transaction systems have been upgraded and/or updated.

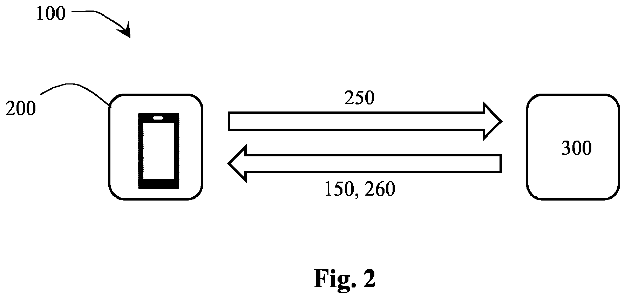

FIG. 2 depicts a generation method 100 for improved transaction identifiers 150.

The device 200 associated with the User 210 (not depicted) is configured and arranged (preferably programmed as a software application) to communicate 250 with a generator 300, which is configured and arranged to generate one or more improved transaction identifiers 150.

The generator 300 may be hardware, software or some combination thereof. It may be provided as a remote server. It may comprise one or more applications running on a mobile device. In some cases, it may be the same mobile device as a POI application and/or an electronic transaction acceptance environment application and/or an authenticator application. It may even be the mobile device 200 associated with the User 210, implemented as an SDK and/or API, for example. It may also be provided as a combination of generator elements 300 distributed over different devices and/or servers. An intermediary may be used for one or more steps in the method.

Before an electronic transaction 400 may be initiated using the device 200 (as described above in relation to FIG. 1), at least one improved transaction identifier 150 is made available for use by the User 210.

In the example depicted in FIG. 2, the device 200 provides an appropriate request 250 to the generator 300 - for security reasons, it may be advantageous for the User 210 to provide some form of identification to the generator 300.

If the User 210 and the operator of the generator 300 have already established a financial relationship, sufficient details may be available to the generator to comprise the respective user identifier 176 (not depicted) in the one or more improved transaction identifiers 150 generated for the User 210. For example, the User 210 may provide the telephone number of the device 220 - the generator 300 may then retrieve the necessary User 210 details from the operator's database, and use the accessed data to generate the one or more improved transaction identifiers 150 comprising that user identifier 176. In this case, the User 210 has provided the respective user identifier 176, but indirectly.

A generator 300 may also be provided for which no financial relationship needs to be established - for example, if the User 210 directly provides a user identifier 176 to the generator 300, the generator 300 may then use the user identifier 176 provided to generate the one or more improved transaction identifiers 150 comprising that user identifier 176.

In another example, a user may provide a PAN (Personal Account Number), a CVC2 code and an expiry date to a server which returns one or more improved transaction identifiers 150.

The one or more improved transaction identifiers 150 are then made available for use by the User 210 in subsequent financial transactions 400.

For example, if at least one network connection to the internet is available, and the generator 300 is available to a high degree when electronic payment transactions 400, are to be initiated, the device 200 may be configured to request 250 an improved transaction identifier 150 immediately prior to using the improved transaction identifier for payment. The generator 300 makes the improved transaction identifier 150 immediately available by sending 260 it to the device 200 that requested it.

Alternatively or additionally, the device 200 may be further configured to comprise suitable storage in the device 200, such as suitable computer memory. The device 200 may be configured to request 250 one or more improved transaction identifiers 150 some time prior to using the improved transaction identifiers 150 for payment. The generator 300 makes the one or more improved transaction identifiers 150 immediately available by sending 260 it/them to the device 200 that requested it, which stores it/them for subsequent use. This is particularly advantageous when the improved transaction identifiers 150 are to be used in an offline period - in other words, when the device 200 has no network connection to the internet and/or when an online generator 300 is not available.

Alternatively or additionally, the generator 300 may be further configured to comprise suitable storage in the device 300, such as suitable computer memory. The device 200 may be configured to request 250 one or more improved transaction identifiers 150 some time prior to using the improved transaction identifiers 150 for payment. The generator 300 makes the one or more improved transaction identifiers 150 immediately available by storing them in an appropriate memory location, associated with User 200. When the device 200 is to be used to initiate an electronic transaction, a request 250 is sent to the generator 300. and the generator responds immediately with one or more improved transaction identifiers. This is particularly advantageous when the generator 300 has limited capacity to generate improved transaction identifiers 150 immediately due to processing limitations.

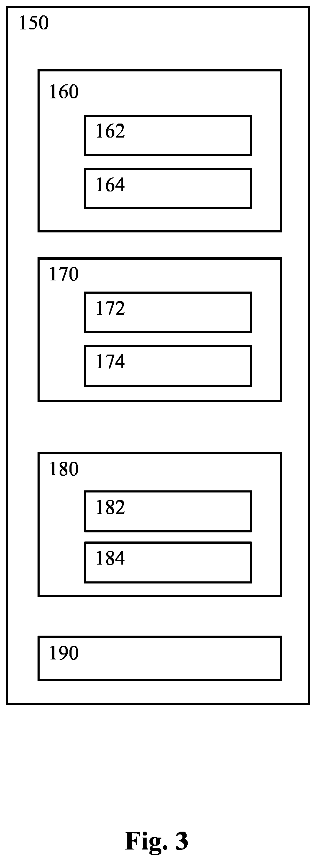

FIG. 3 schematically depicts possible parts and types of information which may be comprised in an improved transaction identifier 150. The improved transaction identifier 150 may be considered as a digital container for a secure and well-regulated distribution and authentication of the information comprised therein.

There are three main types divided into three or more parts:
- routing information 160, configured and arranged such that improved transaction identifier 150 may be routed by the electronic transaction acceptance environment 500 (not depicted) to reach the Authenticator 600 (not depicted). Optionally, additional routing information may be provided for use by the Authenticator 600 to provide additional internal or external routing;
- mapping information 170, which may be considered as the information to be delivered by the improved transaction identifier 150; and
- verification information 180, associated with the respective improved transaction identifier 150, which is used a security measure to reduce the likelihood of fraud in generation and use of the improved transaction identifier 150.

The routing information 160 comprises digital addressing to allow the improved transaction identifier 150 to be communicated (routed) to a suitable Authenticator 600. It may include a plurality of addresses, which may be local and/or remote. Note that the routing information 160 may be an encoding or representation of an address, and not the complete address - for example, a centralized improved transaction identifier processing location may be provided which forwards the improved transaction identifier 150 to the digital location of an Authenticator's 500 server based on an Authenticator 600 Identifier.

The mapping information 170 comprises at least a Transaction Mapping Identifier 174, which may be considered a serial number of an improved transaction identifier 150. It is used to generate one or more improved transaction identifiers 150. The Transaction Mapping Identifier 174 may be of any length, although 7-digit, 8-digit and 9-digit values are preferred as they allow a multiplicity of different values (between 10 million and 1000 million possible values) to be used within the preferred improved transaction identifier length of sixteen, seventeen, eighteen or nineteen digits.

The serial number functionality of the Transaction Mapping Identifier 174 allows the generation and usage of the improved transaction identifier 150 to be traced. It is not necessary to reserve a portion of the Transaction Mapping Identifier 174 to identify the Authenticator 600 as that is comprised in the routing information 160. It is also not necessary to reserve a portion of the Transaction Mapping Identifier 174 to identify an Issuer of the Transaction Mapping Identifier 174. Additionally, it is not necessary to reserve a portion of the Transaction Mapping Identifier 174 to identify an Issuer of the improved transaction identifier 150.

The Transaction Mapping Identifier 174 is directly associated with the improved transaction identifier 150. This is different to a PAN or credit card number - these may be considered conventional transaction identifiers, but they are directly associated with the User 220 due to the use of a card and/or account number. The Transaction Mapping Identifier 174 differs in at least the aspect that it is not directly associated with the User 220. Although in certain embodiments, the improved transaction identifier 150 may be configured to resemble a PAN, the Transaction Mapping Identifier 174 is still not directly associated with the User 220.

The Transaction Mapping Identifier 174 may be indirectly associated with the User 220 by, for example, storing a record of Transaction Mapping Identifiers 174 and/or improved transaction identifiers 150, that have been, for example:
- issued to the User 220;
- made available for use in one or more financial transaction by the User 220;
- accepted for authentication by an Authenticator 600 following use by the user in one or more financial transaction;
- authenticated by an Authenticator 600 following use by the user in one or more financial transaction;
and any combination thereof.

An additional difference with a PAN is that although a PAN may comprise a Luhn checksum, the Luhn value is determined solely by the other digits comprised in the PAN, and no contextual information 190 is used.

The Transaction Mapping Identifiers 174 may be provided (issued as improved transaction identifiers 150 in a non-sequential order. The order may also be randomized or pseudo-randomized.

The verification information may comprise a Verification Code 184, which may be generated using, for example:
- a cryptogenerator on a remote server, either directly or via an intermediary,
- a cryptogenerator comprised in the device 200
- a combination of cryptogenerator elements, distributed over different devices and/or servers.

A Verification Code generator may also be provided on the same server as a generator 300 of improved transaction identifiers 150. A server providing, for example, DSRP (Digital Secure Remote Payment) verification codes may optionally use a DSRP binding component to validate an improved transaction identifier 150 before returning the associated DSRP cryptogram.

Other alternatives may also be used - for example, the improved transaction identifier 150 may be comprised in a list of credentials to be validated during a digital transaction that may contain other data such as DSRP, 3DS and/or any other suitable verification data.

Authentication 600 may be further improved by providing one or more channels of communication with the respective generator 300. The generator 300 may provide the Authenticator 600 with appropriate verification information. For example, the DSRP cryptogram associated with an improved transaction identifier 150 may be stored by the generator 300 (as this was the generator 300 used to generate the specific improved transaction identifier 150) and subsequently accessed using an appropriate access key, such as the improved transaction identifier 150 itself. In practice, the generator 300 and Authenticator 600 are preferably located on the same server, proximate servers or servers with a network connection to make this co-operation simpler and more efficient.

Additional data may be comprised in the mapping information 170 such as an identifier associated with a block (or group) of serial numbers, a country, a region, a geographic area, a back-up facility, an Authenticator 600, a generator, an Issuer, a Sub-Issuer (for example, if the Issuer allows others to generate improved transaction identifiers 150), an authentication category, or any combination thereof. Such data may be used for business purposes, such as analysis and book-keeping. It may also be used to assist routing of the improved transaction identifier 150 to the Authenticator 600, in which case it is functionally also comprised in the routing information 160.

The improved transaction identifier 150 is highly configurable for specific Users 220, Authenticators 600, Issuers and/or generators 300.

Additional information and functions may also be comprised in the data fields - for example, contextual information 190 may also be provided to convey relevant information about how the improved transaction identifier 150 was generated. This contextual information 190 may be used by the Authenticator 600, for example, to simplify authentication, to improve the level of security or to allow improved transaction identifiers 150 to be generated offline. The contextual information 190 may comprise data about the generation (or selection) of the verification information 180, the generation of the improved transaction identifier 150, or any combination thereof.

The improved transaction identifier 150 may comprise data fields which represent fixed values and dynamic values - a fixed value means that the value will be the same for a multiplicity of improved transaction identifiers 150, and a dynamic value means that the value is only used in a few improved transaction identifiers 150 in circulation. In some cases, a dynamic value may be used in only a single improved transaction identifier 150. An improved transaction identifier 150 is dynamic if it comprises at least one dynamic value.

In the terms of this disclosure a multiplicity of improved transaction identifiers 150 is at least one hundred. It is expected that at least one thousand improved transaction identifiers 150 may be used in practice.

The dynamic nature of the improved transaction identifiers 150 may also be attributed to the outcome of the preferred cryptographic operation when generating the Verification Code 184 comprised in the verification information 180. This Verification Code 184 is typically different when different data is used to generate it. The Transaction Mapping Identifier 174 is always used. Optionally, additional data comprised in the improved transaction identifier 150 is also used, such as a Network Identifier 162 (see below), comprised in the routing information 160. In some cases, the Verification Code 184 generated may also depend on the context (the circumstances) of the generation.

Preferably, each improved transaction identifier 150 in circulation is unique, but in some cases, such as merchant-initiated transactions, an improved transaction identifier 150 may be used more than once. In that case, a specific transaction identifier 150 is made available for subsequent use after allowing initiation of an electronic transaction or after initiating an electronic transaction 400 using that specific transaction identifier. It may also be advantageous to allow a minority of improved transaction identifiers 150 to be the same.

The degree to which identical improved transaction identifiers 150 concurrently in circulation is acceptable depends upon the standards applicable at that time for electronic payment transactions within the respective electronic transaction acceptance environment 500.

As the improved transaction identifier 150 comprises verification information 180 and optionally contextual information 190, the degree of similarity may be determined by the values comprised in the parts of improved transaction identifier 150.

As the generator 300 is only limited in the overall appearance of the improved transaction identifiers 150 (which must be recognizable as a valid transaction identifier by the respective electronic transaction acceptance environment 500) and the routing identifier 162 (which instructs the respective electronic transaction acceptance environment 500 where to send the transaction identifier), all other aspects (and contents) of the improved transaction identifier 150 are configurable to provide many desired outcomes.

If only unique numbers are to be tolerated, the generator 300 may be configured to only generate improved transaction identifiers 150 with unique Transaction Mapping Identifiers 174. This may be implemented, for example, by only having a single generator 300, a single Issuer, by providing a central registry, assigning number ranges to each Issuer/generator and any combination thereof. In that case, a high plurality of improved transaction identifiers 150 may be concurrently in circulation - in some cases, a multiplicity of identifiers 150 may be achieved.

Additionally or alternatively, improved transaction identifiers 150 with limited validity may also be used - for example, only valid for 2 minutes. This may reduce the risk of identical improved transaction identifiers 150 being concurrently in circulation.

Additionally or alternatively, a specific transaction identifier 150 may be made unavailable for subsequent use after allowing initiation of or after initiating an electronic transaction 400 using that specific transaction identifier. This specific transaction identifier 150 may then be recycled (re-used) by allowing it to be returned 260 by an identifier generator following a generate request 250. Advantageously, this may provide a higher number of concurrent unique improved transaction identifiers 150 to be in circulation for a fixed number of digits in the improved transaction identifier 150.

A suitable improved transaction identifier 150 for use in the disclosed methods may comprise eighteen digits, for example, further comprising, for example:

| Digits | Possible values |
|---|---|
| 1 - 2 | Network Identifier 162: comprised in the routing information 160. A 2-digit fixed value identifying the processing network for the Authenticator 600. If this is also the issuer of the improved transaction identifiers 150, it may also be considered an Authenticator 600 Identifier. Preferably, the Network Identifier is compliant with ISO/IEC 7812, allowing it to be parsed by existing hardware and software which directs the improved transaction identifier 150 to the appropriate Authenticator 600 for processing. For example, 27 may be used from the 2-series (222100 to 272099) assigned to Mastercard as a 6-digit IIN. |
| 3 - 4 | Improved transaction identifier Indicator 164: comprised in the routing information 160. Functionally, this may alternatively be considered as comprised in the mapping information 170. |
| | |
| | A 2-digit fixed value indicating to the Authenticator 600 how the improved transaction identifier 150 is to be processed. As processing of the improved transaction identifier 150 may uses existing hardware and software, this identifier is provided to assist the Authenticator 600 to distinguish the improved transaction identifiers 150 from other transaction identifiers. As the improved identifiers 150 resemble existing identifiers, a clear indicator 164 may improve the efficiency of identifier handling. |
| | For example, xx20 may be used from the 2-series (222100 to 272099) assigned to Mastercard as a 6-digit IIN. |
| 5 | Mapping Server Identifier 172: comprised in the mapping information 170. Functionally, this may also be considered as being comprised in the routing information 160. |
| | An optional 1-digit value assigned value to allow a transaction to be mapped at an appropriate internal or external destination server accessible to the Authenticator 600 network. In other words, it may be used to indicate to the Authenticator 600 an appropriate server to be used for the authentication. |
| | |
| | Ten possible values [0-9] may be used to assign a region or a back-up system. |
| | Alternatively, this digit may be used by the Transaction Mapping Identifier 174 as a supplemental digit to increase the number of unique improved transaction identifiers 150 which may be generated. |
| 6 - 13 | Transaction Mapping Identifier 174: comprised in the mapping information 170. An 8-digit number that may be considered to be a serial number for improved transaction identifiers 150. The numbers may be used in non-sequential, randomized (or pseudo-randomized), order, allowing a multiplicity of improved transaction identifiers 150 to be generated. With eight digits, up to 100 million values may be possible. |
| | |
| | Any number of digits may be used in practice, but nine or less is preferred to keep the improved transaction identifier 150 as short as possible. It may also be advantageous to reduce the number of digits to seven (see below). |
| 14 | Transaction Mode Identifier 182: comprised in the verification information 180. Optional 1-digit to convey information about any useful aspect of the improved transaction identifier 150 generation process. This Identifier 182 (or an equivalent in one of the other values) may be included to provide information about how the verification information 180 can be validated and who generated it. Functionally, this may also be considered as being comprised in the contextual information 190. |
| | |
| | This Identifier 182 (or an equivalent) is preferred to correctly authenticate. This method 400 may be configured to require the presence of a valid value for this Identifier 182 before an improved transaction identifier 150 is correctly authenticated or validated. |
| | It may be defined, for example, as a codebook value (0 to 9), conveying contextual information 190 about how the Verification Code 184 was generated. |
| | |
| | For example, the improved transaction identifier 150 may have been generated on a server provided by the Issuer of the improved transaction identifier 150 or on the user's device 200 - this is included in the code to assist during validation, as validation of the improved transaction identifier 150 may not be the same in all circumstances. For example, the elements used in the generation of Verification Code 184 may vary and/or the value of some elements be specific to some use cases. |
| | |
| | In the case that the improved transaction identifiers 150 are generated on the server provided by the Issuer of the improved transaction identifier 150, the server may store the required contextual information 190. This may be provided to the server 600 performing the validation of the improved transaction identifier 150 - in such a case, it is less important, or even unnecessary, to provide a Transaction Mode Identifier 182. |
| | |
| | Alternatively, the way in which improved transaction identifiers 150 are generated may be limited to a single context (or where differences in context have no influence on the improved transaction identifier 150 generated), reducing the need to provide the Transaction Mode Identifier 182. In such cases, this digit may be used by the Transaction Mapping Identifier 182 as a supplemental digit to increase the number of unique improved transaction identifiers 150 which may be generated. |
| | Particularly when the improved transaction identifier 150 was generated on a user's device 200, the Authenticator 600 may require more contextual information 190 about how the improved transaction identifier 150 was generated. In many cases, the most important context is related to the way in which the Verification Code 184 was generated. For example, the Transaction Mode Identifier 182 may convey: |
| | 0 = improved transaction identifier 150 generated on server 300 |
| | 1-9 = improved transaction identifier generated on user's device 200 and, for example, whether user authentication such as CDCVM was performed or not, whether the amount was used or not in the generation of the Verification Code 184. These may influence how the Verification Code 184 is generated and consequently may be relevant for validation (authentication) of the improved transaction identifier including the Verification Code 184. |
| | |
| | In the case where more than one Verification Code generator 320 is available, the Transaction Mode Identifier may include appropriate identification of the Verification Code generator 320 used. |
| | |
| | See below for more explanation and examples. |
| 15 - 18 | Verification Code 184: comprised in the verification information 180. 4-digit value preferably used to carry a cryptogram. |
| | The Verification Code 184 may provide a cryptographic means to bind information such as: |
| | • A Network Identifier 162 |
| | • An improved transaction identifier Indicator 164 |
| | • A Mapping Server Identifier 172 |
| | • A Transaction Mapping Identifier 174 |
| | • Transaction Mode Identifier 182 |
| | • An improved transaction identifier Counter |
| | • An amount |
| | • Any other fields shared between the generator 300 and the Authenticator 600 |

The method 400 may be modified depending on, for example, the number of improved transaction identifiers 150 to be allowed in circulation, the number of Issuers of improved transaction identifier 150, the number of generators 300 of improved transaction identifiers, the number of expected users, and the number of expected electronic payment transactions. For example:
- An Issuer (or generator 300) of improved transaction identifiers 150 may generate and issue improved transaction identifiers 150.

Each Issuer may be assigned a range of Transaction Mapping Identifiers 174 to reduce the chance that identical or almost identical improved transaction identifiers are in circulation at the same time. Alternatively or additionally, a centralized register may be provided, allowing each Issuer to check whether the improved transaction identifier 150 comprising a particular Transaction Mapping Identifier 174 may be issued.
- An Issuer of improved transaction identifiers 150 may also process authentication requests 550 as an Authenticator 600.

If a centralized register is provided, each issuer may be allowed to check whether the improved transaction identifiers 150 based on the improved transaction identifier 150 and/or the Transaction Mapping Identifier 182.

Additionally or alternatively, more than one improved transaction identifiers 150 may be provided to a user (pre-generated), allowing improved transaction identifiers 150 to be stored in a suitably configured memory comprised in the device 200. One or more electronic payment transaction may then be still initiated if a server-based generator 300 is not available (offline mode). References to an improved transaction identifier counter cover:
- configurations where the improved transaction identifier Counter is a true counter, configured to generate improved transaction identifiers 150. It may use a sequential process, incrementing by a suitable interval (such as one) at each improved transaction identifier generation. If no initial value is provided, it may start at one or at a random (or pseudo-random value). Preferably a start value is provided (usually by the Issuer);
- configurations where the improved transaction identifier Counter is regularly synchronized with an improved transaction identifier Counter comprised in another generator 300 and/or improved transaction identifier Authenticator 600; and
- configurations where the improved transaction identifier Counter simply stores one or more improved transaction identifiers 150 (or Transaction Mapping Identifiers 174 and possibly other data used to generate improved transaction identifiers 150) provided by another generator 300;
- configurations where the improved transaction identifier Counter generates random (or pseudo-random) numbers for each improved transaction identifier 150;

Additionally or alternatively, a number of further measures may be taken to allow an extended period of offline use by the device 200. The use of any offline mode is preferably controlled and monitored. For example, the improved transaction identifier 150 Authenticator 600 may use information carried using the electronic transaction to determine that the use of an "offline" generated improved transaction identifier 150 is acceptable.

The user device 200 may be further configured and arranged to generate improved transaction identifiers 150 by comprising a generator 300 and memory storage for one or more improved transaction identifier Counters each configured to store a Transaction Mapping Identifier 174. The user device 200 may also further comprises a Verification Code 184 generator.

Offline use may be advantageous when travelling:
- the device 200 may lack internet connectivity when the user is commuting between home and work with limited data connectivity.
- for domestic transactions, users may have sufficient connectivity, but they may choose to stop their data use when roaming due to cost considerations, or their mobile data contracts may not be valid abroad.

Many implementations of the method are possible, but some form of risk management is preferably required. For example: the generator 300 and Authenticator 600 may be configured and arranged to maintain an improved transaction identifier Counter and to regularly synchronize the value of this improved transaction identifier Counter. Preferably it is synchronized when each improved transaction identifier 150 is generated. This provides a robust control on the improved transaction identifiers 150 brought into circulation.

If the device 200 comprises a generator 300, and there is an extended period in which the device 200 and the Authenticator 600 cannot communicate, an improved transaction identifier 150 value (or Transaction Mapping Identifier 174) may be lost, possibly leading to improved transaction identifier Counter desynchronization between the generator 300 and the Authenticator 600. The desynchronization risk becomes higher in an environment having a plurality of generators 300 and/or Authenticators 600 - the generators 300 and Authenticators 600 may decide to keep incrementing their improved transaction identifier Counter, and to keep generating improved transaction identifiers 150 even though one or more generators 300 / improved transaction identifier Authenticators 600 are offline. The cryptographic result (the associated Verification Code 184 may be impacted by desynchronization.
- For example, the Authenticator 600 may be configured and arranged to accept a plurality of improved transaction identifiers 150, for example up to three, generated on the device 200 during an offline period. Authentication of the fourth improved transaction identifier 150 and higher may then be refused. The Authenticator 600 may also be further configured and arranged to require contact between the generator 300 and the Authenticator 600 to resynchronize the improved transaction identifier Counter if more than three improved transaction identifiers 150 have been used offline.

For example, improved transaction identifier generation both online and offline may be supported:
- Device 200 uses improved transaction identifier Counter #1 for the first offline improved transaction identifier generation (on device 200)
- Device 200 uses improved transaction identifier Counter #2 for the second offline improved transaction identifier generation (on device) unless a new set of values has been provided following the new improved transaction identifier generation (on server)
- Device 200 uses and increments (by +1) improved transaction identifier Counter #3 for the next offline improved transaction identifier generation (on device) if no new values are provided following the new improved transaction identifier generation (on server)
- More than three improved transaction identifier Counters may be provided on the device 200. In that case, the use of improved transaction identifier Counter #1 and improved transaction identifier Counter #2 may be preferred as the use of improved transaction identifier Counters #3 and higher may introduce more risk of lost improved transaction identifier 150 values.

If improved transaction identifier Counter 3 and above are used to generate an improved transaction identifier 150, resynchronization between the generator 300 and Authenticator 600 may be required - the correct improved transaction identifier Counter is required for successful validation of a generated Verification Code 184.
- Optionally, the authentication server 600 may also manage risk using information delivered when authenticating the improved transaction identifiers 150, and any other information provided such as transaction data, Merchant Category Code, Location, Type of transaction, POS Entry Mode, acceptance related information, type of terminal, amount, and/or currency.
- Optionally, the method and devices/servers may be configured to allow a larger number of improved transaction identifier Counters to be used, for example ten to one hundred. This may greatly increase the duration which may be tolerated for the user device 200 to be offline.

In such cases, it may be advantageous to comprise the number of the improved transaction identifier Counter used in the contextual information 190 conveyed in the improved transaction identifier 150.

Additionally or alternatively, the improved transaction identifier Counter used may be taken into account when the Verification Code 184 is generated. This contextual information 190 is then required for subsequent validation (authentication) on a different device 200 and/or a server 600. If provided as part of the improved transaction identifier 150, the improved transaction identifier Authenticator will automatically receive it. The number of the improved transaction identifier Counter typically used to improve the security strength of improved transaction identifier method to make it more difficult for an attacker to pre-compute data or to brute-force the system.

For example, a Transaction Mode Identifier 182 may be implemented using a codebook as follows, for example:
0: improved transaction identifier 150 generated on server 300;
1: improved transaction identifier 150 generated on device 200 using Counter #1 with (No CDCVM and No Amount);
2: improved transaction identifier 150 generated on device 200 using Counter #1 with (CDCVM and No Amount);
3: improved transaction identifier 150 generated on device 200 using Counter #1 with (CDCVM and Amount);
4: improved transaction identifier 150 generated on device 200 using Counter #2 with (No CDCVM and No Amount);
5: improved transaction identifier 150 generated on device 200 using Counter #2 with (CDCVM and No Amount);
6: improved transaction identifier 150 generated on device using Counter #2 with (CDCVM and Amount);
7: improved transaction identifier 150 generated on device using Counter #3 and above with (No CDCVM and No Amount);
8: improved transaction identifier 150 generated on device using Counter #3 and above with (CDCVM and No Amount); and
9: improved transaction identifier 150 generated on device using Counter #3 and above with (CDCVM and Amount).

It may be also advantageous to use more than one digit, for example, two digits, to convey more contextual information 190 by extending the codebook. This may, for example, allow contextual information 190 about more improved transaction identifier Counters to be conveyed.

In further examples, an 18-digit improved transaction identifier 150 may comprise:

| Digits | Possible values |
|---|---|
| 1 - 2 | Network Identifier 162 |
| 3 - 4 | improved transaction identifier Indicator 164 |
| 5 - 6 | Mapping Server Identifier 172: |
| | 2-digit instead of 1-digit, allowing more mapping servers to be supported |
| 7 - 13 | Transaction Mapping Identifier 174: |
| | 7-digit instead of 8-digit |
| 14 | Transaction Mode Identifier 182 |
| 15 - 18 | Verification Code 184 |

or:

| Digits | Possible values |
|---|---|
| 1 -2 | Network Identifier 162 |
| 3 - 4 | improved transaction identifier Indicator 164 |
| 5 - 6 | Mapping Server Identifier 172: |
| | 2-digit instead of 1-digit, allowing more mapping servers to be supported |
| 7 - 14 | Transaction Mapping Identifier 174: |
| 15 | Transaction Mode Identifier 182 |
| 16 - 18 | Verification Code 184: |
| | 3-digit instead of 4-digit |

or:

| Digits | Possible values |
|---|---|
| 1 - 2 | Network Identifier 162 |
| 3 - 4 | improved transaction identifier Indicator 164 |
| 5 | Mapping Server Identifier 172: |
| 6 - 14 | Transaction Mapping Identifier 174: |
| | 9-digit instead of 8-digit, allowing more Identifiers 174 - in this case, up to 1000 million possible values |
| 15 | Transaction Mode Identifier 182 |
| 16 - 18 | Verification Code 184: |
| | 3-digit instead of 4-digit |

or:

| Digits | Possible values |
|---|---|
| 1 - 2 | Network Identifier 162 |
| 3 - 4 | improved transaction identifier Indicator 164 |
| 5 | Mapping Server Identifier 172 |
| 6 - 13 | Transaction Mapping Identifier 174 |
| 14 - 15 | Transaction Mode Identifier 182: |
| | 2-digit instead of 1-digit, allowing a larger codebook to be supported |
| 16 - 18 | Verification Code 184: |
| | 3-digit instead of 4-digit |

or:

| Digits | Possible values |
|---|---|
| 1 - 2 | Network Identifier 162 |
| 3 - 4 | improved transaction identifier Indicator 164 |
| 5 | Mapping Server Identifier 172 |
| 6 - 12 | Transaction Mapping Identifier 174: |
| | 7-digit instead of 8-digit |
| 13 - 14 | Transaction Mode Identifier 182: |
| | 2-digit instead of 1-digit, allowing a larger codebook to be supported |
| 15 - 18 | Verification Code 184 |

or:

| Digits | Possible values |
|---|---|
| 1 - 2 | Network Identifier 162 |
| 3 - 4 | improved transaction identifier Indicator 164 |
| 5 | Mapping Server Identifier 172 |
| 6 - 12 | Transaction Mapping Identifier 174: |
| | 7-digit instead of 8-digit, allowing up to 10 million possible values |
| 13 | Transaction Mode Identifier 182 |
| 14 - 18 | Verification Code 184: |
| | 5-digits instead of 4-digits, improving the security level of the Verification Code 184 |

Generation 300 of the improved transaction identifier 150 comprises two main steps:
- generating (or providing) the Transaction Mapping Identifier 174
- generating the Verification Code 182 using the Transaction Mapping Identifier 174, and optionally one or more values comprised in the improved transaction identifier 150.

The Verification Code 184 is a cryptographic key (or cryptographic material or cryptographic assets) - a cryptographically generated value using keyed hash, signature or any suitable cryptographic process with or without an encryption mechanism. For example, a MAC (Message Authentication Code) may be computed using an encryption process.

The process is deterministic in order to allow the Authenticator 600 to subsequently validate (authenticate) the value using input data that was used to generate the Verification Code 184. The cryptographic process requires a list of data and access to a cryptographic key, here the improved transaction identifier Encryption Key. The improved transaction identifier Encryption Key is shared between the entity in charge of generation 300 and the entity in charge of authentication 600.

For successful authentication, the Verification Code generator 320 and the Authenticator 600 are expected to use the same input data. If only data comprised in the improved transaction identifier 150 is used, then it may be sufficient to define a default set of data to be used - for example:
- only Transaction Mapping Identifier 174
- Transaction Mapping Identifier 174 and Mapping Server Identifier 172
- Transaction Mapping Identifier 174, Mapping Server Identifier 172, and Network Identifier 162
- Transaction Mapping Identifier 174, Mapping Server Identifier 172, and Transaction Mode Identifier 182

Optionally, contextual information 190 may also be comprised in the improved transaction identifier 150, and this may be added to the data. Additionally or alternatively, additional parameters and data may be exchanged between a Code generator 320 and the Authenticator 600 to match the Code generation and authentication processes.

In this example, the improved transaction identifier Encryption Key is used to generate a cryptogram as MAC (Message Authentication Codes) according to ISO/IEC 9797-1. For example, algorithm number 1 and pad number 3 (80 Pad).

The cryptogram may then be converted to, for example, a 4-digit Verification Code 184. The full range of (0000-9999) is preferably not used because of the conversion of binary information to a decimal value. For example, the thirteen bits from the generated cryptogram are translated to a 4-digit value (0000-8191) with 18% of the range of values not used (8192-9999). A 5-digit value (00000-65535) may carry sixteen bits of the generated cryptogram with 35% of the range of values not used (65536-99999) while a 3-digit value (000-511) may only carry nine bits of the generated cryptogram with 49% of the range of values not used (512-999).

Optionally, a retry mechanism may be used to carry ten bits using a 9-bit container - the missing values (1000-1023) may be covered by the retry process, while being able to carry the values (512-999).

The improved transaction identifier 150 may be configured to resemble a conventional transaction identifier, such that it will be accepted and routed by the electronic transaction acceptance environment 500. In other words, different standardized formats may be used.
For example:
1. As a PAN value (19-digit):
   - PAN digits [1-18] = improved transaction identifier 150 - digits [1-18]
   - PAN digit [19] = Luhn check computed over the improved transaction identifier 150 - digits [1-18]
   This PAN value may be represented using a 1D barcode 351, a QR 350, an NFC tag or similar.
2. As a PAN Value (16-digit) + CVC (3-digit), typically used for eCommerce and online payments.
   - PAN digits [1-15] = improved transaction identifier 150 - digits [1-15]
   - PAN digit [16] = Luhn check computed over improved transaction identifier 150 - digits [1-15]
   - CVC digits [1-3] = improved transaction identifier 150 - digits [16-18]

It will be obvious to the skilled person that the device 200 may store a plurality of different improved transaction identifiers 150 in memory configured as suitable improved transaction identifier storage 220 with a plurality of different improved transaction identifier 150 formats.

According to ISO/IEC7813, an improved transaction identifier 150 may be stored as follows:
1. as track data for a Contactless Mag Stripe or an NFC Tag
   Example of Track2 data using a 16-digit PAN with Track2 defined as
   - ppppppppppppppppDxxxxyyyzvvvwwwwwwwwwF
      or ppppppppppppppppDxxxxyyyzvvv0F
      ∘ pppppppppppppppp: improved transaction identifier - digits [1-15]
      ∘ p: Luhn check computed over improved transaction identifier 150 - digits [1-15]
      ∘ D: Delimiter
      ∘ xxxx: Expiry date (any valid value)
      ∘ yyy: Service code (any valid value)
      ∘ z: PAN Sequence Number (any valid value)
      ∘ vvv: improved transaction identifier 150 - digits [16-18]
      ∘ wwwwwwwww: not used or filled with any digit
      ∘ F: Filler

      - The service code is a component of Track 2 data that is used to carry information about the transaction used / supported
      - The PAN sequence number (or PSN) is used to distinguish between cards sharing the same PAN number.
2. Example of Track2 data using a 16-digit PAN with Track2 defined as
   - ppppppppppppppppDxxxxyyyzvvwwwwwwwwwwF
      or ppppppppppppppppDxxxxyyyzwF
      ∘ pppppppppppppppp: improved transaction identifier 150 - digits [1-15]
      ∘ p: Luhn check computed over improved transaction identifier 150 - digits [1-15]
      ∘ D: Delimiter
      ∘ xxxx: Expiry date (any valid value)
      ∘ yyy: Service code (any valid value)
      ∘ z: improved transaction identifier 150 - digit [16]
      ∘ vv: improved transaction identifier 150 - digits [17-18]
      ∘ wwwwwwwwww: not used or filled with any digit
      ∘ F: Filler
3. As Track data for a Contactless Mag Stripe or an NFC Tag
   Example of Track2 data using a 13-digit PAN* with Track2 defined as
   - pppppppppppppDxxxxyyyzvvvvvvwwwwwwF
      or pppppppppppppDxxxxyyyzvvvvvv0F
      ∘ ppppppppppppp: improved transaction identifier 150 - digits [1-12]
      ∘ p: Luhn check computed over improved transaction identifier 150 - digits [1-12]
      ∘ D: Delimiter
      ∘ xxxx: Expiry date (any valid value)
      ∘ yyy: Service code (any valid value)
      ∘ z**: PAN Sequence Number (any valid value)
      ∘ vvvvvv: improved transaction identifier 150 - digits [13-18]
      ∘ wwwwww: not used or filled with any digit
      ∘ F: Filler
   Alternatives:
   * 13-digit used as an example - it may be less or more
   ** z may be used to carry improved transaction identifier 150 - digit [13] - while using vvvvv to carry improved transaction identifier 150 - digits [14-18]
4. Example of Track2 data using a 19-digit PAN with Track2 defined as
   - pppppppppppppppppppDxxxxyyyzwwwwwwwwwwF
      or pppppppppppppppppppDxxxxyyyz0F
      ∘ ppppppppppppppppppp: improved transaction identifier 150 - digits [1-18]
      ∘ p: Luhn check computed over improved transaction identifier 150 - digits [1-18]
      ∘ D: Delimiter
      ∘ xxxx: Expiry date (any valid value)
      ∘ yyy: Service code (any valid value)
      ∘ z: PAN Sequence Number (any valid value)
      ∘ wwwwwwwww: not used or filled with any digit
      ∘ F: Filler

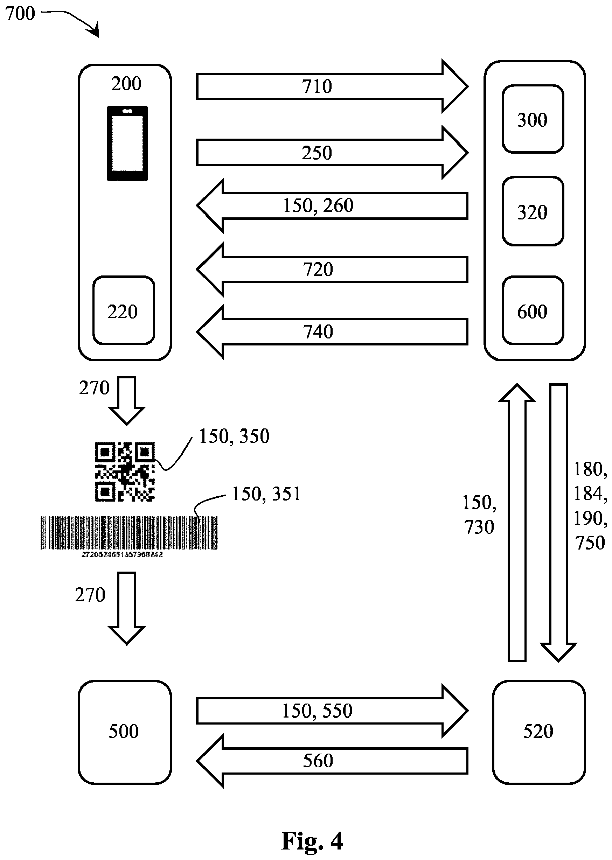

FIG. 4 depicts another example of an electronic transaction method 700 using one or more improved transaction identifiers 150. A generator 320 of Verification Codes 184 (for example, generating DSRP verification codes) and a generator 300 of improved transaction identifiers 150 are provided on a server, usually by an Issuer of the improved transaction identifiers 150. In this example, the server also comprises an Authenticator 600.

A user device 200 is provided for initiating the transaction by providing an improved transaction identifier 150 to an electronic transaction acceptance environment 500. This may be provided via a POI (not depicted) or directly - for clarity, this has not been depicted. In this case, the user device 200 comprises memory 220 for use as storage for one or more improved transaction identifiers 220. The user device 200 is connected by a network to the server, using for example mobile data. The user device 200 is configured to provide the improved transaction identifier 150 to the electronic transaction acceptance environment 500, for example, by displaying a representation 350, 351, 352.

The electronic transaction acceptance environment 500 is typically connected by a network to an Acquirer 520, who provides an interface between the Merchant/Payment Service Provider (comprised in the electronic transaction acceptance environment 500) and the Payment Scheme network (operated by the Issuer in this case, but it could be operated by another party acting on behalf of an Issuer). The Acquirer 520 is connected by a network to the server, for example, by a web (internet) connection. The Acquirer 520 provides a processor to authenticate 600 the electronic transaction.

In this example, the improved transaction identifier 150 is generated immediately prior to initiating the electronic transaction.
- The device 200 initiates contact with the acceptance environment 500. Optionally, the acceptance environment 500 may provide information to device 200 before starting the transaction flow to inform the device 200 about any special requirements for the transaction, such as a requirement for user authentication. Possible forms and channels of interaction may also be provided.
- For example, if a high value transaction is to be performed, the user may be required to perform authentication to the server 710 - this may be directly on the device 200, such as CDCVM, or by entering an online PIN into a merchant keypad.
   1. Device 200 requests 250 (through an API, for example) the generator 300 to provide an improved transaction identifier 150. Optionally, the device 200 may provide the last improved transaction identifier 150 value used by the device 200 from the improved transaction identifier storage 220 as part of the request 250. If it is the first use, or the Issuer does not need the last improved transaction identifier 150 value, then the generator 300 determines the Transaction Mapping Identifier 174 to be used to generate the improved transaction identifier 150. Optionally, authentication information may also be provided.
   2. Using the Transaction Mapping Identifier 174, routing information 160 and optionally contextual information 190, the Verification Code generator 320 generates verification information 180 including a Verification Code 184 - in this case a DSRP cryptogram on the server.
   3. The generator 300 generates an improved transaction identifier 150 on the server using the Transaction Mapping Identifier 174, routing information 160 and verification information 180. Optionally, contextual information 190 may also be used.
   4. The server stores the Verification Code 184 (DSRP cryptogram) using the improved transaction identifier 150 as an access key
   5. The server returns 260 the improved transaction identifier 150 to the device 200. Optionally, additional information such as improved transaction identifier Encryption Keys and improved transaction identifier Counters may also be provided 720 to the device 200
      The device 200 stores the improved transaction identifier 150 in the improved transaction identifier storage 220, together with any additional information such as improved transaction identifier Encryption Keys and improved transaction identifier Counters. In this case, the device 200 is configured to only store a single improved transaction identifier 150, so the last improved transaction identifier used is deleted from the improved transaction identifier storage 220. Optionally, a history may be maintained of improved transaction identifiers 150 used in a different memory storage location.
   6. The device 200 delivers 270 the improved transaction identifier 150 from the improved transaction identifier storage 220 to the electronic transaction acceptance environment 500. For example, a 1D or 2D code representation 350, 351 may be displayed on the screen of the device 200 and read using a Merchant camera comprised in the electronic transaction acceptance environment 500.
   7. Authorization of the improved transaction identifier comprising the improved transaction identifier 150 is requested 550 to the Acquirer 520)
   8. Processing starts of electronic payment transaction using the processor of the Acquirer 520
   9. Validation (authentication) starts of electronic payment transaction using the processor of the Acquirer 520.
   10. The processor of the Acquirer 520 calls 730 the improved transaction identifier Authenticator 600 by providing 730 the improved transaction identifier comprising the improved transaction identifier 150. The Authenticator 600 extracts the improved transaction identifier 150 from the improved transaction identifier, and validates the improved transaction identifier 150.
   11. The Authenticator 600 uses the valid improved transaction identifier 150 to retrieve Verification Code 184, in this case the DSRP cryptogram.
   12. Optionally, the Authenticator 600 may request 740 additional authentication from the device 200 and/or the user. As described above, if required, the user performs authentication to the server 710.
   13. The Authenticator 600 receives and processes this additional authentication information.
   14. The Authenticator 600 returns 750 the verification information 180 to the Acquirer 520. Optionally, contextual information 190 may also be provided 750.
      The verification information 180 comprises the Verification Code 184 (DSRP Cryptogram). The Acquirer 520 processes the information to validate the DSRP Cryptogram and to authorize the electronic transaction (which optionally requires communication with Issuer).
   15. After completing the authorization process, the Authorization Response is prepared.
   16. The Authorization Response 560 is sent back to the electronic transaction acceptance environment 500.
   17. The Acquirer 520 and Merchant may retain relevant information about the electronic transaction. The Acquirer may need to perform further actions to complete the clearing, or they may need proof in case of a dispute. The Merchant may need to perform a related Merchant-Initiated transaction, such as a reversal, void, refund or partial shipment.

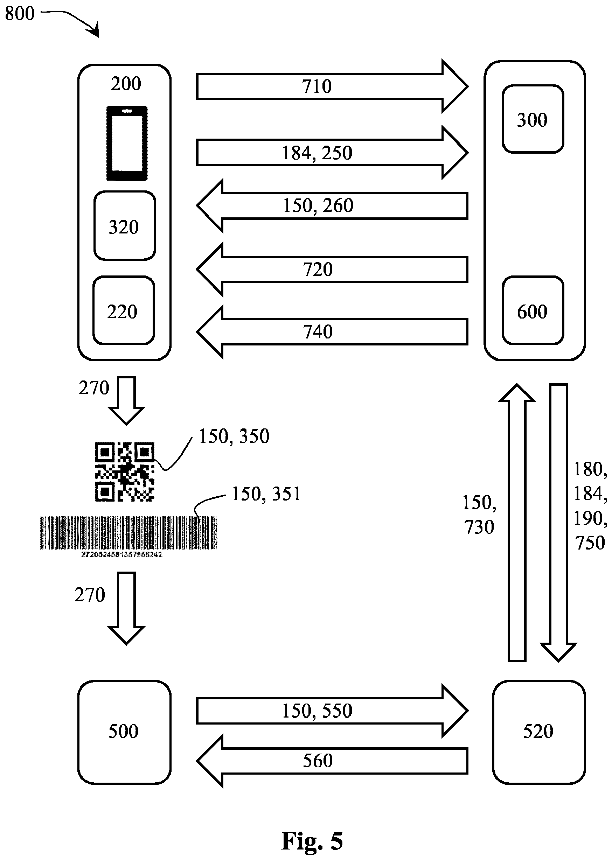

FIG. 5 depicts a further example of an electronic transaction method 800 using one or more improved transaction identifier 301. A Verification Code 184 generator 320 (for example, generating DSRP verification codes) is provided on the device 200, and a generator 300 is provided on a server, usually by the Issuer of the improved transaction identifiers 150. The server also comprises an improved transaction identifier Authenticator 600. So, the server differs from that depicted in FIG. 4 in that it does not comprise a Verification Code generator.

A user device 200 is provided for initiating the transaction by providing an improved transaction identifier 150 to an electronic transaction acceptance environment 500. The user device 200 comprises memory for use as improved transaction identifier storage 220 and the Verification Code 184 generator 320. So, the user device 200 differs from that depicted in FIG. 4 in that it comprises a Verification Code generator 320. The user device 200 is connected by a network to the server, using for example mobile data. The user device 200 is configured to provide the improved transaction identifier 150 to the electronic transaction acceptance environment 500, for example, by displaying a representation 350, 351, 352.

The electronic transaction acceptance environment 500 is typically connected by a network to an Acquirer 520, who provides an interface between the Merchant/Payment Service Provider (comprised in the electronic transaction acceptance environment 500) and the Payment Scheme network (operated by the Issuer, or another party acting on behalf of an Issuer). The Acquirer 520 is connected by a network to the server, for example, by a web (internet) connection. The Acquirer 520 provides a processor to validate the electronic transaction. The electronic transaction acceptance environment 500 and the Acquirer 520 are the same as depicted in FIG. 4.

In this example, the improved transaction identifier 150 is also generated immediately prior to initiating the electronic transaction.
- As described for FIG. 4, the device 200 initiates contact with the acceptance environment 500. Optionally, the user may also be required to perform authentication to the server 710.
   1. The user performs authentication, such as CDCVM or entering a PIN into the device 200 in order to access the Verification Code generator 320 (in this case a DSRP generator 320) comprised in the device 200. This step is not shown in FIG. 5.
      The Verification Code generator 320 generates a Verification Code 184 with the required format for inclusion in the improved transaction identifier 150 to be generated.
   2. The device 200 requests 250 (through an API, for example) the generator 300 to provide an improved transaction identifier 150. Optionally, the device 200 may provide the last improved transaction identifier value as explained for FIG. 4. Optionally, any authentication information may be provided. In this case, the device 200 also provides 250 the Verification Code 184 (the DSRP cryptogram) to be included in the improved transaction identifier 150. More generally, verification information 180 may be provided 250 from the device 200 to the server. Optionally, contextual information 190 about the Verification Code 184 generation may also be provided 250.
   3. The generator 300 determines the Transaction Mapping Identifier 174 to be used to generate the improved transaction identifier 150. Using the Transaction Mapping Identifier 174, routing information 160 and the verification information 180, the generator 300 generates the improved transaction identifier 150 on the server.
      The verification information 180 comprises the Verification Code 184 generated by the Code generator 320 on the device 200. Optionally, contextual information 190 may also be used.
   4. The server stores the Verification Code 184 (DSRP cryptogram) using the improved transaction identifier 150 as an access key
   5. The server returns 260 the improved transaction identifier 150 to the device 200. Optionally, additional information such as improved transaction identifier Encryption Keys and improved transaction identifier Counters may also be provided 260 to the device 200.
      The device 200 stores the improved transaction identifier 150 in the improved transaction identifier storage 220, together with any additional information such as improved transaction identifier Encryption Keys and improved transaction identifier Counters as explained for FIG. 4.
   6. The device 200 delivers 270 the improved transaction identifier 150 from the improved transaction identifier storage 220 as an improved transaction identifier to the electronic transaction acceptance environment 500.
      The rest of the authorization and processing of the electronic transaction is identical to the one depicted in FIG. 4, and described above.
      7.)

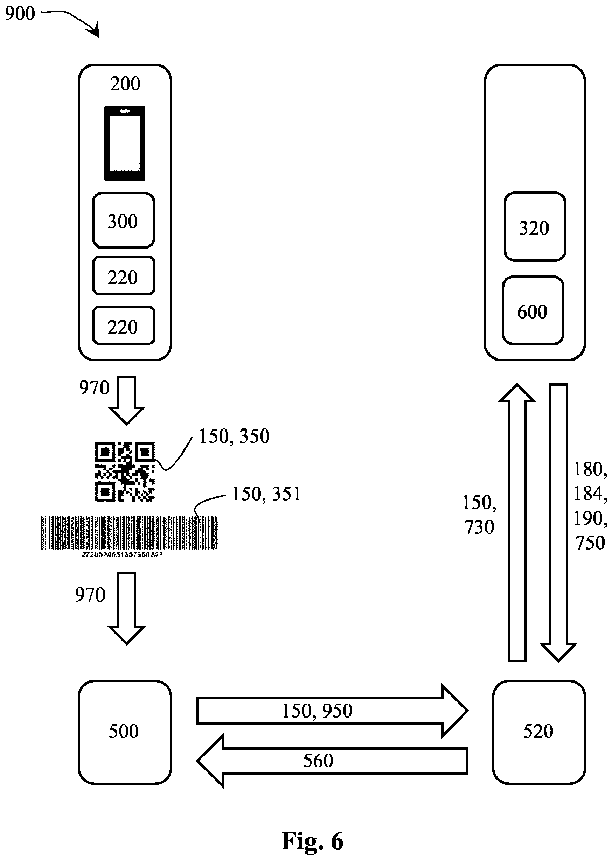

FIG. 6 depicts yet another example of a payment method 900 using one or more improved transaction identifiers 150. A generator 300 is provided on the device 200. An improved Authenticator 600 is provided on a server, usually by the Issuer of the improved transaction identifiers 150. A Verification Code 184 generator 320 (for example, generating DSRP verification codes) is also provided on the server. So, the server differs from that depicted in FIG. 5 in that it does not comprise a generator, but it does comprise a Verification Code generator 320.

A user device 200 is provided for initiating the transaction by providing an improved transaction identifier 150 to an electronic transaction acceptance environment 500. The user device 200 comprises memory for use as storage 220 for partial transaction identifier storage 220 and the generator 300. So, the user device 200 differs from that depicted in FIG. 5 in that it comprises a generator 300 and it does not comprise a Verification Code generator - it can therefore only generate partial improved transaction identifiers 150.

The user device 200 is connected by a network to the server, using for example mobile data. The user device 200 is configured to provide the improved transaction identifier 150 to the electronic transaction acceptance environment 500, for example, by displaying a representation 350, 351, 352.

The generator 300 is typically provided by the Issuer of the improved transaction identifiers 150, and is configured to determine the Transaction Mapping Identifier 174 to be used to generate the partial improved transaction identifier 150.

Additionally or alternatively, the device may further comprise generator storage 230, comprising memory storage for one or more improved transaction identifier Counters each configured to store a Transaction Mapping Identifier 174. This allows improved transaction identifier generation to be performed if the device is not able to make contact (offline) with the Issuer of the improved transaction identifiers 150. The generator storage 230 may also comprise memory storage for one or more improved transaction identifier Encryption Keys - although the device 200 does not comprise a Verification Code generator, the one or more improved transaction identifier Encryption Keys are preferably provided with the partial improved transaction identifier code 150 when it is communicated for authentication. A different improved transaction identifier Encryption Key may be used for each partial improved transaction identifier 150, or a plurality of partial improved transaction identifiers may be associated with a single improved transaction identifier Encryption Key.

The device 200 is also configured to provide routing information 160 to the generator 300. The device 200 may be configured to generate one or more partial improved transaction identifiers 150 offline, or require regular synchronization with the Issuer of the improved transaction identifiers 150 to ensure that the generator parameters and data are up-to-date and valid.

The electronic transaction acceptance environment 500 is typically connected by a network to an Acquirer 520. The electronic transaction acceptance environment 500 and the Acquirer 520 are the same as depicted in FIG. 4 and in FIG. 5.

In this example, the partial improved transaction identifier 150 is generated immediately prior to initiating the electronic transaction.
- As described for FIG. 4 and FIG. 5, the device 200 initiates contact with the acceptance environment 500.
   1. The user performs authentication, such as CDCVM or entering a PIN into the device 200 in order to access the generator 300 comprised in the device 200. This step is not shown in FIG. 6.
   2. The device 200 requests the generator 300 on the device 200 to provide a partial improved transaction identifier 150. Optionally, the device 200 may provide the last partial improved transaction identifier value as explained for FIG. 4 and for FIG. 5. In this case, the device 200 does not provide a Verification Code to be included in the partial improved transaction identifier 150.
   3. The generator 300 determines the Transaction Mapping Identifier 174 to be used to generate the partial improved transaction identifier 150 - an algorithm may be used, and/or a Transaction Mapping Identifier 174 may be selected from one of the improved transaction identifier Counters in the generator storage 230. Using the determined Transaction Mapping Identifier 174 and routing information 160, the generator 300 on the device 200 generates the partial improved transaction identifier 150. Optionally, contextual information 190 about the improved transaction identifier generation may be included.
   4. The Device 200 may remove the improved transaction identifier Key and the Transaction Mapping Identifier 174 (improved transaction identifier Counter contents) from the generator storage 230 after use.
      The partial improved transaction identifier 150 is stored in the partial improved transaction identifier storage 220.
      The device 200 delivers 970 the partial improved transaction identifier 150 from the improved transaction identifier storage 220 as an improved transaction identifier to the electronic transaction acceptance environment 500 as explained above in relation to FIG. 4 and FIG. 5 for a full improved transaction identifier 150. However, in this case, the device 200 also provides 970 the associated improved transaction identifier Encryption Key.
   5. Authorization of the improved transaction identifier comprising the partial improved transaction identifier 150 is requested 950 to the Acquirer 520. In addition, in this case, the electronic transaction acceptance environment 500 also provides 950 the associated improved transaction identifier Encryption Key to the Acquirer 520.
   6. Processing starts of electronic payment transaction using the processor of the Acquirer 520.
   7. Validation (authentication) starts of electronic payment transaction using the processor of the Acquirer 520.
   8. The processor of the Acquirer 520 calls the Authenticator 600 by providing the improved transaction identifier comprising the partial improved transaction identifier 150. The Authenticator 600 extracts the partial improved transaction identifier 150 from the improved transaction identifier, and validates the partial improved transaction identifier 150.
   9. The Authenticator 600 provides the valid partial improved transaction identifier 150 to the Verification Code generator 320 on the server, which generates verification information 180 including a Verification Code 184 - in this case a DSRP cryptogram.
   10. The Authenticator 600 returns 750 the verification information 180 (here the DSRP Cryptogram as Verification Code 184) to the Acquirer 520 Optionally, contextual information 190 may also be provided 750.
      Optionally, the processor of the Acquirer 520 may re-validate (re-authenticate) the Verification Code (DSRP Cryptogram).
   11. The Acquirer 520 processes the information to validate the DSRP Cryptogram and to authorize the electronic transaction (which optionally requires communication with Issuer).
   12. After completing the authorization process, the Authorization Response is prepared.
   13. The Authorization Response 560 is sent back to the electronic transaction acceptance environment 500.
   14. As described above in relation to FIG. 4 and FIG. 5, the Acquirer 520 and Merchant may retain relevant information about the electronic transaction.

Similarly, the device 200 depicted in FIG. 6 may be further configured and arranged to comprise a Verification Code 184 generator 320 as depicted in FIG. 5. In this case, full improved transaction identifiers 150 may be generated. The device 200 is further configured and arranged:
- to allow the Verification Code 184 generator to communicate with the improved transaction identifier generator 300;
- to allow the improved transaction identifier generator 300 to associate Transaction Mapping Identifiers 174 and other data from the improved transaction identifier with a Verification Code 184, to generate one or more improved transaction identifiers 150;
- to generate one of the multiplicity of improved transaction identifiers 150 using the identifier generator 300, the generated identifier comprising: verification information 180 including the verification code 184 generated; the one or more transaction mapping identifier 174 used for generating the verification code 184; and the routing information 160 from the Issuer.

This device 200 is further configured and arranged for offline use by the device 200 further comprising: one or more a storage register for transaction mapping identifiers 174;
the method further comprising:
- receiving from an Issuer one or more transaction mapping identifiers 174, and storing the one or more identifiers 174 in the one or more storage registers 230;
- receiving from an Issuer routing information 160; and
- generating a verification code 184 associated with the one of the transaction mapping identifiers 174 from the storage registers 230.

The device 200 may receive and store one or more Transaction Mapping Identifiers 174 in the one or more storage registers 230 when it is online, and use these Identifiers 174 to generate improved transaction identifiers when offline. Alternatively or additionally, the one or more storage registers 230 may be configured as one or more improved transaction identifier Counters, allowing Transaction Mapping Identifiers 174 and other related parts of the improved transaction identifier 150 to be generated offline on the device 200. Regular synchronization with the Issuer of the improved transaction identifiers 150 may be required to ensure that the device 200 parameters and data are up-to-date and valid.

As used herein and in the appended claims, the term "processor" should be understood to encompass a single processor or two or more processors in communication with each other.

Any suitable authentication may be used by the user at one or more places in the methods described:
- a PIN (Personal Identification Number) entered on the device 200
- a biometric parameter or identity detected or read by the device 200
- A locally-verified CDCVM (Consumer Device Cardholder Verification Method)
- Any other method to authenticate the user such Mobile PIN as supported when using MCBP (Mastercard Cloud-Based Payments)

For example, authentication may be required to generate an improved transaction identifier, to generate a verification code, to provide the representation 350, 351, 352, to initiate the electronic transaction or any combination thereof. Authentication may be used for accessing the generator (on server and/or on a device) and/or DSRP generator (on server) and/or device.

The routing information 160 may be configured to allow the owner of a processing network, to be identified using a Network Identifier 162. This owner may assign part of the range of ISO/IEC7812 for the sole purpose of issuing improved transaction identifiers 150. This range of values may be identifiable (and routable) using the routing information 160 - a Network Identifier 162 and an improved transaction identifier Indicator 164.

Typically, a server configured to provide a plurality of suitable services may comprise:
- support for in-bound API requests 250 from the device 200 to generate and provide 260 one or more improved transaction identifiers 150
- support for generation of DSRP-related data including DSRP cryptogram;
- support for out-bound API protocols to contact the device 200 for additional authentication (for example, in the case of High Value Transactions when no CDCVM (Consumer Device Cardholder Verification Method) was provided by the device 200 or user)

The flow charts and descriptions thereof herein should not be understood to prescribe a fixed order of performing the method steps described therein. Rather the method steps may be performed in any order that is practicable. Similarly, the examples used to explain the methods and devices are not intended to represent the only implementations of these methods and devices - the person skilled in the art will be able to conceive many different ways to achieve the same functionality as provided by the embodiments described herein.

Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

### DRAWING REFERENCE NUMBERS

100 Improved transaction identifier generation method
150 Improved transaction identifier
160 Routing information
162 Network Identifier
164 Improved transaction identifier Indicator
170 Mapping information
172 Mapping Server Identifier
174 Transaction Mapping Identifier
176 User identifier
180 Verification information
182 Transaction Mode Identifier
184 Verification Code
190 Contextual information
200 Mobile device
210 User, such as a Consumer
220 improved transaction identifier storage
230 generator storage
250 improved transaction identifier generation request
260 improved transaction identifier generation response
270 Providing data representation of improved transaction identifier
290 Providing improved transaction identifier
300 Generator of improved transaction identifiers
320 Verification Code generator
350 Representation of improved transaction identifier as a QR code
351 Representation of improved transaction identifier as a ID Barcode
351 Representation of improved transaction identifier as a ID Barcode
400 Electronic payment transaction method using improved transaction identifier
500 Electronic transaction acceptance environment
520 Acquirer
540 POI
550 Authentication request
560 Authentication response
600 Authenticator of improved transaction identifier - operated by Authenticator (issuer) as server
700 Example of electronic payment transaction method using improved transaction identifiers
710 Authentication from device to server
720 Additional improved transaction identifier information provided
730 Acquirer calls Authenticator by providing improved transaction identifier
740 Authenticator requests additional authentication from device
750 Authenticator 600 returns verification information to Acquirer
800 Example of electronic payment transaction method using improved transaction identifiers
900 Example of electronic payment transaction method using improved transaction identifiers
950 Improved transaction identifier authentication request with Encryption Key
970 Providing data representation (of improved transaction identifier) and associated Encryption Key

## Claims

1. A computer-implemented electronic transaction method (400) comprising:
- a user (210) obtaining a serial number (174) not directly associated with the user (210);
- the user (210) providing (270) a transaction identifier (150) to an electronic transaction acceptance environment (500) to initiate an electronic transaction, the transaction identifier (150) comprising:
- a routing identifier (160);
- the serial number (174) not directly associated with the user (210);
- contextual information (190) comprising one or more parameters associated with the generation of the transaction identifier (150);
- verification information (180) comprising a value calculated deterministically using the serial number (174) and the contextual information (190);
the method further comprising:
- the electronic transaction acceptance environment (500) communicating (550) the transaction identifier (150) to an Authenticator (600) using the routing identifier (160);
- the Authenticator (600) authenticating (560) the transaction identifier (150) using the verification information (180), the serial number (174) and the contextual information (190); and
- allowing initiation of the electronic transaction (400) if the transaction identifier (150) is considered authentic.

2. The method of claim 1, wherein:
- the user (210) obtains the serial number (174) comprised in the transaction identifier (150).

3. The method of claim 1 or claim 2, wherein the method (400) further comprises:
- the user (210) providing an earlier-available serial number (174) and/or an earlier-available transaction identifier (150) to a transaction identifier generator (300); and
- the user (210) obtaining the serial number (174) and/or the transaction identifier (150) from the transaction identifier generator (300).

4. The method of any preceding claim, wherein the method (400) further comprises:
- the user (210) obtaining a further serial number (174) and/or a further transaction identifier (150), which the user (210) subsequently uses to initiate a further electronic transaction.

5. The method of any preceding claim, the method further comprising:
- the user (210) obtaining a transaction identifier generator (300); and
- using the transaction identifier generator (300) to generate one or more serial numbers (174) and/or one or more transaction identifiers (150) for subsequently initiating one or more electronic transactions.

6. The method of claim 5, the method further comprising:
- using the transaction identifier generator (300) to generate verification information (180) suitable for being comprised in one or more transaction identifiers (150).

7. The method of any preceding claim, wherein the method (400) further comprises:
indirectly associating the serial number (174) with the user (220).

8. The method of according to claim 7, wherein indirect association is made by:
- issuing the serial number (174) and/or the transaction identifier (150) to the user (220);
- making the serial number (174) and/or the transaction identifier (150) available for use in one or more financial transaction by the user (220);
- accepting the transaction identifier (150) for authentication by an Authenticator (600) following use by the user (220) in a financial transaction;
- authenticating the transaction identifier (150) for authentication by an Authenticator (600) following use by the user (220) in a financial transaction;
and any combination thereof.

9. The method of any preceding claim, wherein:
- the electronic transaction acceptance environment (500) is configured and arranged to process the transaction identifier (150) as a standard-compliant transaction identifier;
- the transaction identifier (150) is standard-compliant;
- the routing identifier (160) is standard-compliant; and
the standard is ISO-7812, EMV, or any combination thereof.

10. The method of claim 9, wherein:
- the serial number (174) and/or verification information (180) are not compliant with the standard.

11. The method of any preceding claim, wherein:
- the transaction identifier (150) resembles a Primary Account Number (PAN).

12. The method of any preceding claim, wherein:
- the transaction identifier (150) comprises a Luhn check digit.

13. The method of any preceding claim, wherein:
- the electronic transaction acceptance environment (500) comprises a POI having a processor, programmed to receive the transaction identifier (150) and to forward (290) the transaction identifier (150);
the method (400) further comprising:
- the user (210) providing (270) the transaction identifier (150) to the POI (540), directly or through an intermediary, to initiate the electronic transaction.

14. The method of any preceding claim, the method further comprising:
- making the serial number (174) and/or the transaction identifier (150) unavailable for subsequent use after initiating the electronic transaction (400) using the transaction identifier (150), or after allowing initiation of the electronic transaction (400) by the Authenticator (600).

15. The method of any preceding claim, the method further comprising:
- making the serial number (174) and/or transaction identifier (150) available for subsequent use after initiating the electronic transaction (400) using the transaction identifier (150), or after allowing initiation of the electronic transaction (400) by the Authenticator (600).

16. The method of any preceding claim, wherein the transaction identifier (150) is provided to the electronic transaction acceptance environment (500) as a non-alphanumeric representation (350, 351).

17. The method of any preceding claim, wherein the transaction identifier (150) comprises no more than nineteen digits, preferably no more than eighteen digits, more preferably no more seventeen digits, most preferably no more than sixteen digits.

18. The method of any preceding claim, wherein the serial number (174) comprises no more than nine digits, preferably no more than eight digits, most preferably no more than seven digits.

19. The method of any preceding claim, the method further comprising:
- after receiving the transaction identifier (150) by the Authenticator (600), evaluating one or more parameters associated with the generation and/or use of the transaction identifier (150) in the electronic transaction; and
- allowing initiation of the electronic transaction (400) if the one or more parameters are evaluated to be acceptable.

20. The method of claim 19, wherein the transaction identifier (150) comprises a mode identifier (182) for conveying one or more parameters to the Authenticator (600) about:
- use of a server to generate one or more values in the respective transaction identifier (150);
- use of a user device (200) to generate one or more values in respective transaction identifier (150);
- use of user authentication before generation of one or more values in the respective transaction identifier (150);
- use of an amount for generating the verification information (180);
- use of a storage register (230) for the respective transaction identifier (150);
and any combination thereof.

21. The method of any preceding claim, wherein the transaction identifier (150) comprises contextual information (190) for conveying data to the Authenticator (600) regarding:
- the generation of the respective transaction identifier (150), the generation of any verification information (180) comprised in the respective transaction identifier (150), the algorithm used to generate the respective transaction identifier (150), hardware used to generate the respective transaction identifier (150), software used to generate the respective transaction identifier (150), or any combination thereof.

22. The method of any preceding claim, wherein the transaction identifier (150) comprises:
- a network identifier (162) associated with the Authenticator (600);
- a generator identifier associated with a generator of the transaction identifier (150);
- a processing indicator (164) for influencing how the Authenticator (600) processes the transaction identifier (150);
- a mapping server identifier (172) for indicating to the Authenticator (600) a server to be used for the authentication;
and any combination thereof.

23. A device (200), associated with a user (210), configured and arranged to initiate an electronic transaction (400) according to any of the preceding claims, the device comprising:
- a storage register for storing one or more transaction identifiers (150) and for making them available for subsequent use in one or more electronic transactions (400).

24. A device (200) associated with a user (210), configured and arranged to initiate an electronic transaction (400) according to any of the preceding claims, the device (200) comprising:
- an identifier generator (300) for generating one or more serial numbers (174) and/or one or more transaction identifiers (150), and for making them available for subsequent use in financial transactions (400).
